(19) **Europäisches Patentamt European Patent Office Office européen des brevets**

(11) **EP 3 144 702 B1**

(12) **EUROPEAN PATENT SPECIFICATION**

(45) Date of publication and mention of the grant of the patent:
**13.06.2018 Bulletin 2018/24**

(51) Int Cl.:
*G01S 13/90* $^{(2006.01)}$      *G01S 13/34* $^{(2006.01)}$

(21) Application number: **16165273.0**

(22) Date of filing: **14.04.2016**

(54) **METHOD AND DEVICE FOR SYNTHETHIC APERTURE RADAR IMAGING BASED ON NON-LINEAR FREQUENCY MODULATION SIGNAL**

**VERFAHREN UND VORRICHTUNG ZUR BILDGEBUNG MIT SYNTHETISCHER APERTUR BASIEREND AUF NICHTLINEAREM FREQUENZMODULATIONSSIGNAL**

**PROCÉDÉ ET DISPOSITIF D'IMAGERIE RADAR À OUVERTURE SYNTHÉTIQUE BASÉ SUR UN SIGNAL DE MODULATION DE FRÉQUENCE NON LINÉAIRE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2015 CN 201510595722**

(43) Date of publication of application:
**22.03.2017 Bulletin 2017/12**

(73) Proprietor: **Institute of Electronics, Chinese Academy of Sciences Beijing 100190 (CN)**

(72) Inventors:
• **Deng, Yunkai**
  **100190 Beijing (CN)**
• **Wang, Wei**
  **100190 Beijing (CN)**
• **Wang, Yu**
  **100190 Beijing (CN)**
• **Zhang, Zhimin**
  **100190 Beijing (CN)**
• **Wang, Chunle**
  **100190 Beijing (CN)**

(74) Representative: **Gulde & Partner Patent- und Rechtsanwaltskanzlei mbB Wallstraße 58/59 10179 Berlin (DE)**

(56) References cited:
• **Cihan Bayindir: "ENHANCEMENTS TO SYNTHETIC APERTURE RADAR CHIRP WAVEFORMS AND NON-COHERENT SAR CHANGE DETECTION FOLLOWING LARGE SCALE DISASTERS" In: "ENHANCEMENTS TO SYNTHETIC APERTURE RADAR CHIRP WAVEFORMS AND NON-COHERENT SAR CHANGE DETECTION FOLLOWING LARGE SCALE DISASTERS", 1 May 2013 (2013-05-01), Georgia Institute of Technology, Atlanta, XP055339742, pages 1-206, * Chapter III, sec. 4.1, 4.3 * * ***
• **Jamal Saeedi: "Synthetic aperture radar signal processing using nonlinear frequency modulation and phase error compensation" In: "Synthetic aperture radar signal processing using nonlinear frequency modulation and phase error compensation", 1 September 2015 (2015-09-01), Amirkabir University of Technology, Tehran, XP055339727, pages 1-139, DOI: 10.13140/RG.2.1.3890.3446, * sec. 4.3.3 ***
• **Armin W Doerry: "SAR Processing with Non-Linear FM Chirp Waveforms", SANDIA REPORT SAND2006-7729, 1 December 2006 (2006-12-01), pages 1-66, XP055339748, Albuquerque Retrieved from the Internet: URL:http://prod.sandia.gov/techlib/access-control.cgi/2006/067729.pdf [retrieved on 2017-01-27]**

**EP 3 144 702 B1**

- **JAMAL SAEEDI ET AL: "Non-linear Frequency Modulation Using Piecewise Linear Functions for Synthetic Aperture Radar Imaging", 10TH EUROPEAN CONFERENCE ON SYNTHETIC APERTURE RADAR, 5 June 2014 (2014-06-05), pages 1-4, XP055339835, ISBN: 978-3-8007-3607-2**
- **Cihan Bayindir: "A NOVEL NONLINEAR FREQUENCY MODULATED CHIRP SIGNAL FOR SYNTHETIC APERTURE RADAR AND SONAR IMAGING", Journal of Naval Science and Engineering, 12 September 2015 (2015-09-12), pages 68-81, XP055339723, Retrieved from the Internet: URL:http://www2.isikun.edu.tr/personel/cih an.bayindir/CB_Navy_2015.pdf [retrieved on 2017-01-27]**

**Description**

**TECHNICAL FIELD**

The present disclosure relates to a technology for a Synthetic Aperture Radar (SAR), and in particular to a method and device for SAR imaging based on a non-linear frequency modulation signal.

**BACKGROUND**

SAR is a high-resolution imaging radar that can obtain, in an atmospheric condition with very low visibility, high-resolution radar images similar to those obtained through photography, and SAR is typically mounted on an aircraft or satellite so that it can perform distance measurement and 2D imaging according to the moving track of the platform. A Linear Frequency Modulation (LFM) signal has a transmitted waveform most commonly used in an SAR system, a response function generated from matched filtering of this waveform has a normalized Peak Side Lobe Ratio (PSLR) of -13 dB. Weighted windowing, adaptive filtering and other optimization algorithm are generally used to suppress the height of a side lobe, however, these methods may mismatch matched filters and reduce Signal to Noise Ratio (SNR).

Compared to LFM signals, Non-Linear Frequency Modulation (NLFM) signals have pulse compression results that may exhibit a very low PSLR, and do not have their output SNRs lost during pulse compression. Some experiments show that NLFM signals can avoid an SNR loss of 1 to -2 dB, which thus save 25% of the transmission power of an antenna. The performance of a radar system that suffers from energy shortage can be improved when NLFM signals are used as the transmitted waveform.

Cihan Bayindir: "ENHANCEMENTS TO SYNTHETIC APERTURE RADAR CHIRP WAVEFORMS AND NON-COHERENT SAR CHANGE DETECTION FOLLOWING LARGE SCALE DISASTERS" (1 May 2013, Georgia Institute of Technology, Atlanta, XP055339742, pages 1-206) discloses that synthetic aperture radar (SAR) is one of the most versatile tools ever invented for imaging. Due to its better Rayleigh resolution, SAR imaging provides the highest quality radar imagery. These images are used for many applications including but not limited to terrestrial mapping, disasterreconnaissance, medical imaging and military applications. Imaging techniques or geometries which can improve the resolution of the reconstructed imagery is always desired in the SAR imaging. In this dissertation both the linear and nonlinear frequency modulated chirp signals are discussed. The most widely used frequency modulated chirp signal, linear frequency modulated chirp signal, and some of its properties such as spectrum, point spread function and matched filter are summarized. A new nonlinear frequency modulated chirp signal which can be used to improve the image resolution is introduced. In order to validate the offered chirp signal, spotlight SAR imaging geometry together with 2D polar and Stolt format reconstruction algorithms are considered. The synthetic examples are generated using both chirps both with polar and Stolt format processing. Additionally a new change detection method which depends on the idea of generating two different final change maps of the initial and final images in a sequence is offered. The specific algorithms utilized for testing this method are the widely used correlation coefficient change statistic and the intensity ratio change statistic algorithms. This method together with the algorithms mentioned is first applied to synthetic data generated by Stoltformat processing. It is shown that the method works on synthetic data. The method together with the algorithms mentioned is also applied to two case studies dfreal disasters, one is 2010 Gulf of Mexico oil spill and the second is 2008 China Sichuan earthquake. It is shown that two final change map method can reduce the false identifications of the changes. Also it is shown that intensity ratio change statistics is a better tool for identifying the changes due to oil contamination. The data used in this study is acquired by Japanese Aerospace Agency's Advanced Land Observing Satellite (ALOS) through Alaska SAR Facility (ASF), at the University of Alaska, Fairbanks.

Jamal Saeedi: "Synthetic aperture radar signal processing using nonlinear frequency modulation and phase error compensation" (1 September 2015, Amirkabir University of Technology, Tehran, XP055339727, pages 1-139) discloses that signal-processing issues of synthetic aperture radar (SAR) have been under consideration. Signal processing of SAR signal is a process of transforming the raw SAR signal into the gray level image. Specifically, he has focused on two topics in the field of SAR signal processing in this research consisting of nonlinear frequency modulation (NLFM) signal in SAR imaging, and phase error compensation using a new autofocus algorithm. In the first study, a new NLFM waveform is developed, which can be used as a transmitted chirp in SAR imaging to improve the imaging quality compared to LFM chirp signal. The new NLFM is constructed based on pricewise linear functions which is optimized using multi-objective optimization. Different signal prospecting algorithms including time domain correlation, back-projection, omega-k, and range-Doppler algorithm are investigated in order to use NLFM as the transmitted chirp in SAR system. In addition, a modified motion compensation algorithm using navigation data is proposed for frequency domain algorithm. Strip-map SAR geometry is considered to generate SAR raw signal for both point and distributed targets, in order to validate the new offered chirp signal and the proposed motion compensation algorithm. In the second study, a new autofocus algorithm is proposed for back-projection (BP) image formation of SAR imaging. The approach is based on maximizing an objective function obtained by prominent points in different sub-apertures of constructed SAR image by varying the flight trajectory parameters. While image-quality-based autofocus approach together with BP algorithm can be computationally intensive, he uses approximations that allow optimal corrections to be derived. The approach is applicable for focusing different signal processing algorithms by obtaining modified flight trajectory parameters. Different examples demonstrate the effectiveness of the new autofocus approach applied to the frequency modulated continuous wave mode SAR dataset.

Armin W Doerry: "SAR Processing with Non-Linear FM Chirp Waveforms" (SANDIA Report SAND2006-7729, 1 December 2006, pages 1-66, XP055339748) discloses that nonlinear FM (NLFM) waveforms offer a radar matched filter output with inherently low range sidelobes. This yields a 1-2 dB advantage in Signal-to-Noise Ratio over the output of a Linear FM (LFM) waveform with equivalent sidelobe filtering. This report presents details of processing NLFM waveforms in both range and Doppler dimensions, with special emphasis on compensating intra-pulse Doppler, often cited as a weakness of NLFM waveforms.

Jamal Saeedi et al.: "Non-linear frequency modulation using piecewise linear functions for synthetic aperture radar imaging" (10th European Conference on Synthetic Aperture Radar, 5 June 2014, pages 1-4, XP055339835) develops a newnon-linear frequency modulation (NLFM) waveform is developed, which can be used as a transmitted chirp in synthetic aperture radar (SAR) imaging to improve the imaging quality compared to LFM. The new NLFM waveform is constructed based on piecewise linear functions. Time domain signal processing algorithms including time domain correlation and back-projection are investigated in order to use NLFM as the transmitted chirp in SAR system. Strip-map SAR geometry is considered to generate SAR raw signal for point target analysis, in order to validate the new offered waveform.

Cihan Bayindir: "A NOVEL NONLINEAR FREQUENCY MODULATED CHIRP SIGNALFOR SYNTHETIC APERTURE RADAR AND SONAR IMAGING" (Journal of Naval Science and Engineering, 12 September 2015, pages 68-81, XP055339723) discloses phasecoded signals are used in radar and sonar signal processing in order to maintain average power levels as well as high range resolution. One of the most commonly used phase-coded signals is the linear frequency modulated chirp waveform. Various nonlinear frequency-modulated chirps are offered as alternatives to linear frequency modulated chirp. In this paper a new nonlinear frequency modulated chirp waveform is proposed. Properties like bandwidths, point spread functions and Fourier transforms are given for the proposed chirp signal. Synthetic imagery for spotlight imaging geometry is reconstructed by using the polar format and Stolt format processing techniques using the linear frequency-modulated (LFM) and proposed nonlinear frequency modulated chirp. Comparisons are presented, and it is shown that proposed waveform can improve the sonar image resolution.

However, SAR imaging algorithms commonly used are all designed for LFM signals, thus it is impractical to copy these algorithms directly into SAR data processing under NLFM, and it is necessary to provide an SAR imaging method based on NLFM transmitted waveforms.

## SUMMARY

In view of the above, embodiments of the present disclosure are intended to provide a method and device for SAR imaging based on a NLFM signal, which enable an SAR to use a NLFM signal as a transmitted waveform and thus obtain a well-focused image, thereby improving system performance.

To this end, the technical solutions of the present disclosure are implemented as follows.

An embodiment of the present disclosure provides a method for SAR imaging based on a NLFM signal, including:

range pulse compression is performed on echo data according to a transmitted NLFM signal to determine data subjected to the range pulse compression;
a slant range error is determined, and the data subjected to the range pulse compression is compensated for a motion error at a reference distance according to the slant range error to obtain compensated data;
modified Stolt mapping is performed on the compensated data to obtain data subjected to Range Cell Migration Correction (RCMC) and range-azimuth coupling compensation; and
the data subjected to the RCMC and the range-azimuth coupling compensation is compensated for a residual motion error, and azimuth focusing is performed on the data subjected to the compensation of the residual motion error,
wherein performing the range pulse compression on the echo data according to the transmitted NLFM signal to determine the data subjected to the range pulse compression may include:

the echo data is demodulated and 2D Fourier transform is performed on the demodulated echo data to obtain echo data in a range frequency domain;
two ends of the transmitted NLFM signal are filled with zeros so as to reach a length of the echo data, Fourier transform is performed on the transmitted NLFM signal subjected to the zero-filling and then the zero-filled NLFM signal subjected to Fourier transform is conjugated to obtain a processed NLFM signal; and
the processed NLFM signal is multiplied by the echo data in the range frequency domain, and 2D inverse Fourier transform is performed on a product of the multiplication to obtain the data subjected to the range pulse compression,

wherein performing the modified Stolt mapping on the compensated data to obtain the data subjected to the RCMC and the range-azimuth coupling compensation may include:

azimuth Fourier transform is performed on the compensated data and the modified Stolt mapping is performed on the data subjected to the azimuth Fourier transform to obtain the data subjected to the RCMC and the range-azimuth coupling compensation, wherein the modified Stolt mapping is expressed as

$$f_2 = \sqrt{(f_c + f_t)^2 - \frac{c^2 f_\eta^2}{4V_s^2}} - \sqrt{f_c^2 - \frac{c^2 f_\eta^2}{4V_s^2}}$$

where $f_2$ represents a new range frequency variable, $V_s$ represents a velocity of a radar, c represents a velocity of light, $f_t$ represents a range frequency, $f_\eta$ represents an azimuth frequency, and $f_c$ represents a carrier frequency of the radar.

In the above solution, determining the slant range error, and compensating, according to the slant range error, the data subjected to the range pulse compression for the motion error at the reference distance to obtain compensated data may include:

a real motion path is acquired by fitting according to an east velocity, a north velocity and a vertical velocity, and the slant range error between the real motion path and an ideal motion path in a sight-line direction is determined; and the data subjected to the range pulse compression is transformed to a range frequency domain and the transformed data is multiplied by a phase corresponding to the slant range error to obtain the compensated data.

In the above solution, compensating the data subjected to the RCMC and the range-azimuth coupling compensation for the residual motion error and performing the azimuth focusing on the data subjected to the compensation of the residual motion error may include:

2D inverse Fourier transform is performed on the data subjected to the RCMC and the range-azimuth coupling compensation, and the data subjected to 2D inverse Fourier transform is compensated for the residual motion error using space-variant motion compensation to obtain the data subjected to the compensation of the residual motion error; and the data subjected to the compensation of the residual motion error is transformed to a range Doppler domain and azimuth compression is performed on the data transformed to the range Doppler domain.

An embodiment of the present disclosure further provides a device for SAR imaging based on a NLFM signal, including a pulse compression module, a first compensation module, a mapping module, a second compensation module and an azimuth focusing module, in which:

the pulse compression module is configured to perform range pulse compression on echo data according to a transmitted NLFM signal to determine data subjected to the range pulse compression; the first determination module is configured to determine a slant range error, and compensate, according to the slant range error, the data subjected to the range pulse compression for a motion error at a reference distance to obtain compensated data; the mapping module is configured to perform modified Stolt mapping on the compensated data to obtain data subjected to Range Cell Migration Correction (RCMC) and range-azimuth coupling compensation; the second compensation module is configured to compensate the data subjected to the RCMC and the range-azimuth coupling compensation for a residual motion error; and the azimuth focusing module is configured to perform the azimuth focusing on the data subjected to the compensation of the residual motion error, wherein the pulse compression module may be specifically configured to:

demodulate the echo data and perform 2D Fourier transform on the demodulated echo data to obtain echo data in a range frequency domain; fill two ends of the transmitted NLFM signal with zeros so as to reach a length of the echo data, perform Fourier transform on the transmitted NLFM signal subjected to the zero-filling and then conjugate the zero-filled NLFM signal subjected to the Fourier transform to obtain a processed NLFM signal; and
multiply the processed NLFM signal by the echo data in the range frequency domain and perform 2D inverse Fourier transform on a product of the multiplication to obtain the data subjected to the range pulse compression, wherein the mapping module may be specifically configured to:
perform azimuth Fourier transform on the compensated data and perform the modified Stolt mapping on the data subjected to the azimuth Fourier transform to obtain the data subjected to the RCMC and the range-azimuth coupling compensation, wherein the modified Stolt mapping is expressed as

$$f_2 = \sqrt{(f_c + f_t)^2 - \frac{c^2 f_\eta^2}{4V_s^2}} - \sqrt{f_c^2 - \frac{c^2 f_\eta^2}{4V_s^2}}$$

where $f_2$ represents a new range frequency variable, $V_s$ represents a velocity of a radar, c represents a velocity of light, $f_t$ represents a range frequency, $f_\eta$ represents an azimuth frequency, and $f_c$ represents a carrier frequency of the radar.

In the above solution, the first compensation module may be specifically configured to:

acquire a real motion path by fitting according to an east velocity, a north velocity and a vertical velocity and determine the slant range error between the real motion path and an ideal motion path in a sight-line direction; and transform the data subjected to the range pulse compression to a range frequency domain and multiply the transformed data by a phase corresponding to the slant range error to obtain the compensated data.

In the above solution, the second compensation module may be specifically configured toperform 2D inverse Fourier transform on the data subjected to the RCMC and the range-azimuth coupling compensation, and compensate for the residual motion error using space-variant motion compensation to obtain the data subjected to the compensation of the residual motion error, and the azimuth focusing module may be specifically configured to transform the data subjected to the compensation of the residual motion error to a range Doppler domain and perform azimuth compression on the data transformed to the range Doppler domain.

In the SAR imaging method and device based on a NLFM signal according to the embodiments of the present disclosure, range pulse compression is performed on echo data according to a transmitted NLFM signal to determine data subjected to the range pulse compression; a slant range error is determined, and the data subjected to the range pulse compression is compensated for a motion error at a reference distance according to the slant range error to obtain compensated data; modified Stolt mapping is performed on the compensated data to obtain data subjected to RCMC and range-azimuth coupling compensation; and the data subjected to the RCMC and the range-azimuth coupling compensation is compensated for a residual motion error, and azimuth focusing is performed on the data subjected to the compensation of the residual motion error. In this way, an SAR is enabled to use a NLFM signal as a transmitted waveform and thus obtain a well-focused image, thereby improving system performance.

## BRIEF DESCRIPTION OF THE DRAWINGS

Fig. 1 is a flow chart of a method for generating an NLFM signal according to an embodiment of the present disclosure;
Fig. 2 is a schematic diagram showing a designed imaging scenario;
Fig. 3 is a schematic diagram showing an imaging result of a focused target point;
Fig. 4 is a schematic diagram showing a result of target points P1, P2 and P3 subjected to interpolation;
Fig. 5 shows an imaging result of real experimental data of an airborne SAR and an enlarged view of a strong target point;
Fig. 6 is a schematic diagram showing an interpolated result of the strong target point; and
Fig. 7 is a schematic structural diagram of a device for generating an NLFM signal according to an embodiment of the present disclosure.

## DETAILED DESCRIPTION

In embodiments of the present disclosure, range pulse compression is performed on echo data according to a transmitted NLFM signal to determine data subjected to the range pulse compression; a slant range error is determined, and the data subjected to the range pulse compression is compensated for a motion error at a reference distance according to the slant range error to obtain compensated data; modified Stolt mapping is performed on the compensated data to obtain data subjected to RCMC and range-azimuth coupling compensation; and the data subjected to the RCMC and the range-azimuth coupling compensation is compensated for a residual motion error, and azimuth focusing is performed on the data subjected to the compensation of the residual motion error.

The present disclosure will be further elaborated below in conjunction with embodiments.

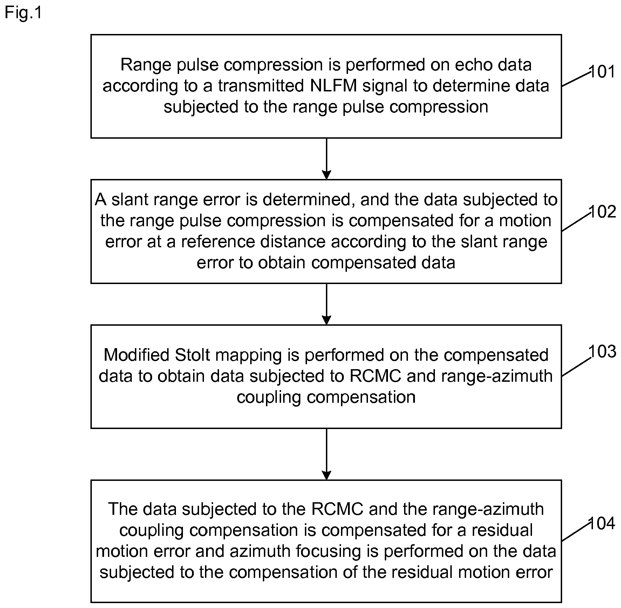

An SAR imaging method based on a NLFM signal according to an embodiment of the present disclosure, as shown in Fig. 1, includes steps as follows.

Step 101, range pulse compression is performed on echo data according to a transmitted NLFM signal to determine data subjected to the range pulse compression;

specifically, the echo data is demodulated, a signal transmitted by an SAR is reflected when encountering an obstacle, and for one reflection point, its demodulated echo model can be represented by an expression (1):

$$r(t,\eta) = A_0 \cdot w_r(t - 2R(\eta)/c) \cdot w_a(\eta - \eta_c)$$
$$\cdot \exp(-j4\pi f_c R(\eta)/c) \cdot \exp(j2\pi\phi(t - 2R(\eta)/c)) \quad (1)$$

where $r(t,\eta)$ represents the demodulated echo model, $A_0$ is a complex constant indicating the amplitude of a signal, $\eta$ represents azimuth time, $\eta_c$ represents the offset time of a beam center, $R(\eta)$ represents an instantaneous slant range, $w_r$ and $w_a$ represent a range envelope and an azimuth envelope, respectively, and c is the speed of light.

In ideal conditions, if the SAR is mounted on an aircraft and the aircraft has a straight flight path, then the SAR also has a straight flight path, the slant range of a target point can be represented as $R(\eta) = \sqrt{r^2 + V_s^2\eta^2}$ , where r represents the shortest slant range and $V_s$ is the speed of the radar.

The expression (1) is transformed to the frequency domain after a two-dimensional Fourier transform, and the echo data $R(f_t, f_\eta)$ in the range frequency domain is obtained, which can be expressed as

$$R(f_t, f_\eta) = A_1 \cdot W_r(f_t) \cdot W_a(f_\eta - f_{\eta c}) \cdot \exp(j\theta_{2df}(f_t, f_\eta)) \quad (2)$$

where $A_1$ indicates the amplitude of the spectrum, $W_r$ and $W_a$ represent the frequency envelops of the range direction and the azimuth direction respectively, and $f_{\eta c}$ represents the Doppler center frequency. The phase term $\theta_{2df}(f_t, f_\eta)$ can be represented with the expression (3) as follows:

$$\theta_{2df}(f_t, f_\eta) = -\frac{4\pi r}{c}\sqrt{(f_c + f_t)^2 - \frac{c^2 f_\eta^2}{4V_s^2}} + \Theta(f_t) \quad (3)$$

where $\Theta(f_t)$ represents the phase term of the base-band frequency spectrum of the NLFM signal.

The transmitted NLFM signal is $s(t)$, two ends of $s(t)$ are filled with zeros so as to reach the length of the echo data, the signal subjected to the zero-filling is $s'(t)$, Fourier transform is performed on $s'(t)$ and then the zero-filled NLFM signal subjected to Fourier transform is conjugated to obtain a processed NLFM signal $H_r(f_t)$ expressed as:

$$H_r(f_t) = \exp(-j\Theta(f_t)) = [\text{FT}[s'(t)]]^* \quad (4)$$

where FT[ ] represents Fourier transformation.

$\Theta(f_t)$ can be eliminated by multiplying the expression (4) of the processed NLFM signal with the expression (2) of the echo data. Then the 2D frequency spectrum $R_1(f_t, f_\eta)$ of the signal can be expressed as

$$R_1(f_t, f_\eta) = A_1 \cdot W_r(f_t) \cdot W_a(f_\eta - f_{\eta c}) \cdot \exp\left(j\left(-\frac{4\pi r}{c}\sqrt{(f_c + f_t)^2 - \frac{c^2 f_\eta^2}{4V_s^2}}\right)\right) \quad (5)$$

Then, the data is transformed back to the 2D time domain through inverse Fourier transform to obtain data subjected to the range pulse compression;

In the embodiment, in order to eliminate $\Theta(f_t)$, the data may also be transformed to the range frequency domain and then multiplied by the expression (4), which involves less calculation. The expressions derived above are used to intuitively indicate the change of 2D frequency spectra of data.

Step 102, a slant range error is determined, and the data subjected to the range pulse compression is compensated for a motion error at a reference distance according to the slant range error to obtain compensated data;

Specifically, a carrier aircraft may deviate from the ideal course in actual flight because it may not fly stably, thus the real motion path of the aircraft can be acquired through fitting calculation based on an east velocity, a north velocity and a vertical velocity of the aircraft recorded at each pulse transmission. From the real motion path, a real slant range in a sight-line direction between the carrier aircraft and a coverage center (i.e., swath center target) of the signal transmitted from the SAR is calculated, and a real slant range error can be obtained by subtraction of the real slant range from the ideal slant range. This error amounts to a delay error in a time domain, but this delay typically has a fractional delay, thus this error can be compensated by multiplying the data subjected to the range pulse compression, which is transferred to a range frequency domain, with a corresponding phase. Through the above steps, the data subjected to the range pulse compression can be compensated for the motion error at the reference distance to obtain the compensated data. In the embodiment, an inertial navigation system carried in the aircraft can be used to record the east velocity, the north velocity and the vertical velocity of the aircraft at each pulse transmission.

Step 103, modified Stolt mapping is performed on the compensated data to obtain data subjected to RCMC and range-azimuth coupling compensation;

specifically, the compensated data is transformed firstly to a 2D frequency domain through azimuth Fourier transform, then modified Stolt mapping is performed on the transformed data in the 2D frequency domain; here, the modification separates RCMC and range-azimuth coupling compensation from azimuth focusing on a basis of the conventional Stolt mapping, and the separation is intended to complete compensation of a space-variant motion error before the azimuth compression. The modified Stolt mapping is expressed as

$$f_2 = \sqrt{(f_c + f_t)^2 - \frac{c^2 f_\eta^2}{4V_s^2}} - \sqrt{f_c^2 - \frac{c^2 f_\eta^2}{4V_s^2}} \quad (6)$$

where $f_2$ represents a new range frequency variable, $f_t$ represents a range frequency, $f_\eta$ represents an azimuth frequency and $f_c$ represents a carrier frequency of the radar; after completion of the modified Stolt mapping, the 2D spectrum $R_1(f_t, f_\eta)$ of the data can be expressed as:

$$R_1(f_t, f_\eta) = A_1 \cdot W_r(f_t) \cdot W_a(f_\eta - f_{\eta_c}) \cdot \exp\left(-j\frac{4\pi r}{c}\left(\sqrt{f_c^2 - \frac{c^2 f_\eta^2}{4V_s^2}} + f_2\right)\right) \quad (7)$$

It can be seen from the expression (7) that the square root term of the phase term is only related to the azimuth frequency but not the range frequency; then the data subjected to the RCMC and the range-azimuth coupling compensation can be obtained using the space-variant motion error compensation.

Step 104, the data subjected to the RCMC and the range-azimuth coupling compensation is compensated for a residual motion error and azimuth focusing is performed on the data subjected to the compensation of the residual motion error;

Specifically, the data subjected to the RCMC and the range-azimuth coupling compensation is transformed to a 2D time domain through 2D inverse Fourier transform; the data has some unknown errors, such as the error of the system per se and non-motion errors, besides a residual motion error at the reference distance; the data is compensated for the residual motion error using the space-variant motion compensation to obtain the data subjected to the compensation of the residual motion error; in the embodiment, the space-variant motion compensation can be a Phase Gradient Autofocus (PGA) method.

After completion of the above steps, the data subjected to the compensation of the residual motion error is transformed to a range Doppler domain and azimuth compression is performed on the data transformed to the range Doppler domain, where the azimuth range matched filtering function can be expressed as

$$H_a\left(r,f_\eta\right) = \exp\left( j\frac{4\pi r}{c}\sqrt{f_c^2 - \frac{c^2 f_\eta^2}{4V_s^2}} \right) \qquad (8)$$

The completion of this step indicates completion of imaging of the NLFM signal.

The present disclosure will be further described in detail below with reference to a first embodiment.

An NLFM signal is used as a transmitted waveform (with its auto-correlated side lobe being -35 dB), and the parameters for system simulation are shown in Table 1.

Table 1

| Operation mode | Strip |
|---|---|
| Radar velocity | 150m/s |
| Waveform | 0.0566m |
| Doppler bandwidth | 150Hz |
| Pulse Repetition Frequency (PRF) | 195Hz |
| Slant range of swath center | 20km |
| Bandwidth of transmitted signal | 120MHz |
| Pulse width | 15us |

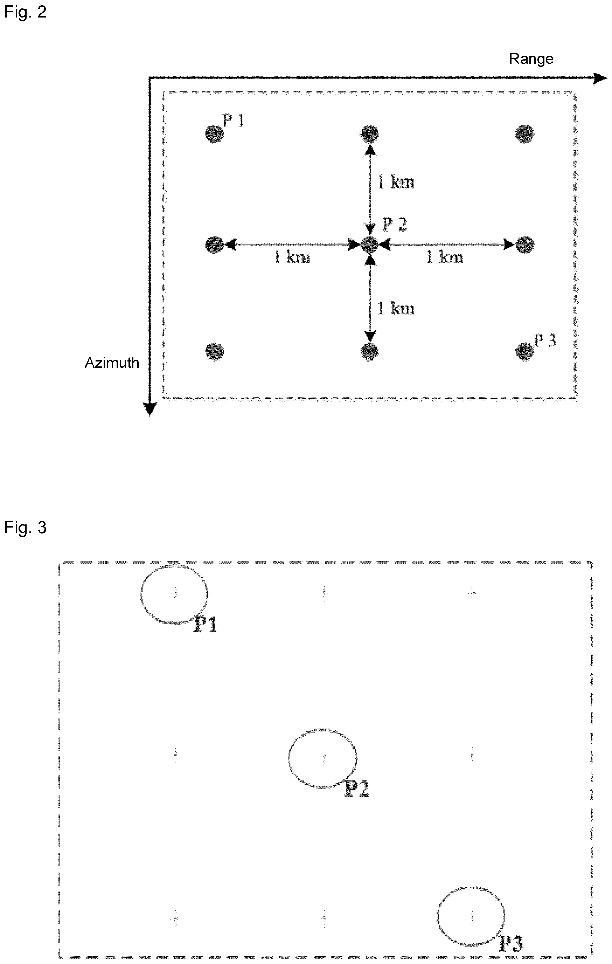

The designed imaging scenario has nine target points as shown in Fig. 2. The above steps are used to focus on a target point. In the first embodiment, motion errors are not introduced into the simulation, thus two motion compensations in steps 102 and 104 can be skipped, and the result of the focused target points is as shown in Fig. 3.

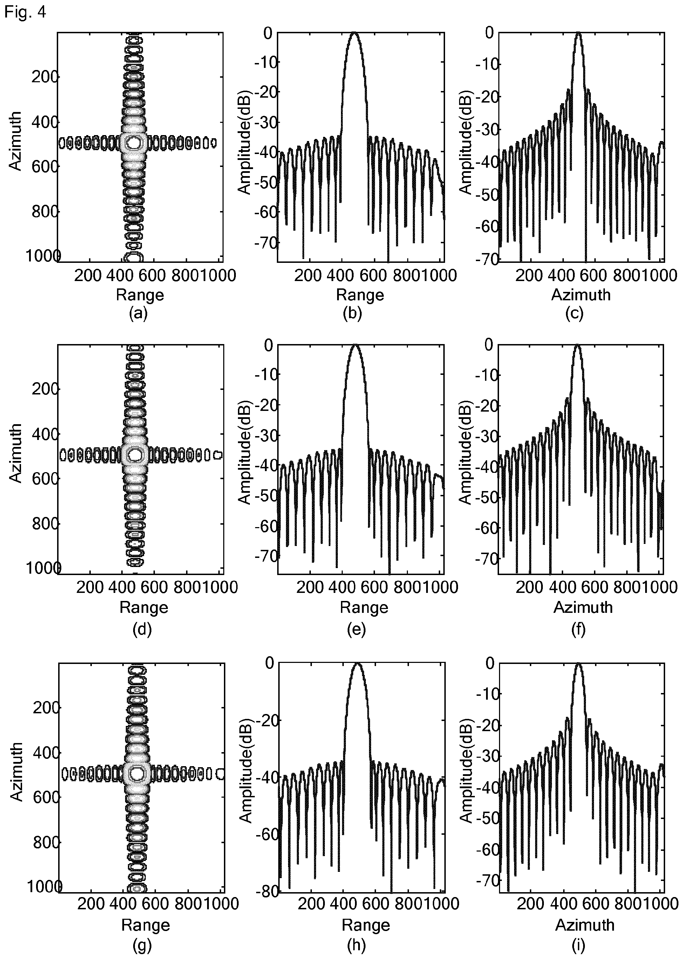

The points P1, P2, P3 shown in Fig. 2 are interpolated, and Fig. 4 shows the obtained contour plots, range profiles and azimuth profiles of the target points, where (a) shows the contour plot of P1, (b) shows the range profile of P1, (c) shows the azimuth profile of P1, (d) shows the contour plot of P2, (e) shows the range profile of P2, (f) shows the azimuth profile of P2, (h) shows the contour plot of P3, (i) shows the range profile of P3 and (j) shows the azimuth profile of P3; and the corresponding quality assessment parameters for target points are as shown in Table 2.

Table 2

| Target Point | Range | | | Azimuth | | |
|---|---|---|---|---|---|---|
| | Slant Res. (m) | PSLR (dB) | ISLR (dB) | Resoluti on (m) | PSLR (dB) | ISLR (dB) |
| P1 | 1.47 | -34.52 | -28.76 | 0.91 | -17.78 | -15.14 |
| P2 | 1.47 | -34.56 | -28.72 | 0.96 | -17.78 | -15.18 |
| P3 | 1.47 | -34.59 | -28.68 | 1.01 | -17.79 | -15.17 |

The present disclosure will be further described in detail below with reference to a second embodiment.

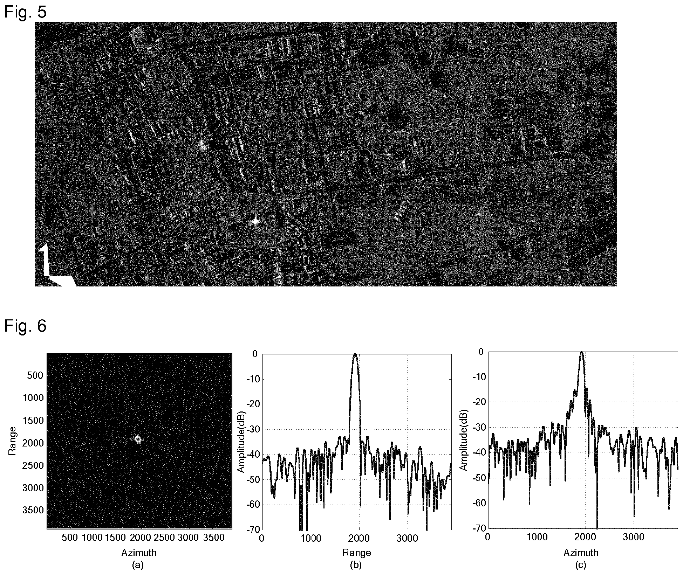

A C-band airborne SAR using an NLFM signal (with its auto-correlated side lobe being -35 dB) as its transmitted waveform is used to image its echo data. Since the flying of the airborne platform is instable and there is an error, the aforementioned steps are used to image data and the imaging result is as shown in Fig. 5, where a red region shows an enlarged view of a strong target point.

The strong point shown in Fig. 5 is interpolated, and Fig. 6 shows a obtained contour plot, a range profile and an azimuth profile, where (a) shows the contour plot, (b) shows the range profile and (c) shows the azimuth profile.

It can be seen that the strong target point is well focused, and the PSLR of the range profile is about -35 dB, which is matched with a theoretical value.

It can be seen from the above description that the method according to the present disclosure can accurately image SAR data which has a transmitted waveform that is a NLFM signal.

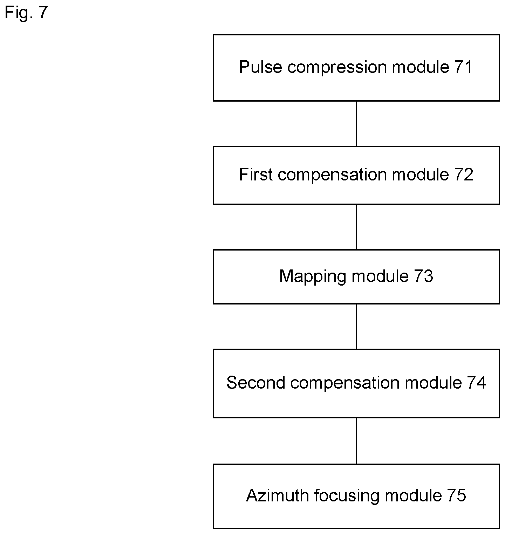

An SAR imaging device based on a NLFM signal according to an embodiment of the present disclosure, as shown in Fig.7, includes a pulse compression module 71, a first compensation module 72, a mapping module 73, a second compensation module 74 and an azimuth focusing module 75, in which:

the pulse compression module 71 is configured to perform range pulse compression on echo data according to a transmitted NLFM signal to determine data subjected to the range pulse compression;

echo data is demodulated, a signal transmitted by an SAR is reflected when encountering an obstacle, and for one reflection point, its demodulated echo model can be represented by the expression (1), where $r(t,\eta)$ represents the demodulated echo model, $A_0$ is a complex constant indicating the amplitude of the signal, $\eta$ represents azimuth time, $\eta_c$ represents offset time of a beam center, $R(\eta)$ represents an instantaneous slant range, $w_r$ and $w_a$ represent a range envelope and an azimuth envelope, respectively, and c is the speed of light. In ideal conditions, if the SAR is mounted on an aircraft and the aircraft has a straight flight path, then the SAR also has a straight flight path, the slant range of a target point can be written as $R(\eta)=\sqrt{r^2+V_s^2\eta^2}$ , where r represents the shortest slant range and $V_s$ is the speed of the radar.

The expression (1) is transformed through 2D Fourier transform to the frequency domain to obtain echo data $R(f_t, f_\eta)$ in a range frequency domain, which can be represented by the expression (2), where $A_1$ indicates the amplitude of the spectrum, $W_r$ and $W_a$ represent the frequency envelops of the range and azimuth direction respectively, and $f_{\eta c}$ represents a Doppler center frequency. The phase term $\theta_{2df}(f_t,f_\eta)$ can be written as the expression (3), where $\Theta(f_t)$ represents the phase term of the base-band frequency spectrum of a NLFM signal.

The transmitted NLFM signal is $s(t)$, two ends of $s(t)$ are filled with zeros so as to reach the length of the echo data, the signal subjected to the zero-filling is $s'(t)$, Fourier transform is performed on $s'(t)$ and then the zero-filled NLFM signal subjected to Fourier transform is conjugated to obtain a processed NLFM signal $H_r(f_t)$ expressed by the expression (4), where FT[] represents Fourier transform.

$\Theta(f_t)$ can be eliminated by multiplying the expression (4) of the processed NLFM signal with the expression (2) of the echo data. Then the 2D frequency spectrum $R_1(f_t,f_\eta)$ of the signal can be expressed by the expression (5).

Then, the data is transformed back to the 2D time domain through inverse Fourier transform to obtain the data subjected to the range pulse compression;

The first determination module 72 is configured to determine a slant range error, and compensate the data subjected to the range pulse compression for a motion error at a reference distance to obtain compensated data;

specifically, the flying of a carrier aircraft is instable and its real flying path may deviate from the ideal course, thus the real motion path of the aircraft can be acquired through fitting calculation based on an east velocity, a north velocity and a vertical velocity of the aircraft recorded at each pulse transmission. From the real motion path, a real slant range in a sight-line direction between the aircraft carrying a SAR and a coverage center (i.e., swath center target) of a signal transmitted from the SAR is calculated, and a real slant range error can be obtained by subtraction of the real slant range from the ideal slant range. This error is taken equal to a delay error in a time domain, but this delay typically has a fractional delay, thus a compensation manner is that the data subjected to the range pulse compression is transformed to a range frequency domain and then the transformed data is multiplied with a corresponding phase so as to eliminate the error. Through above steps, the motion error at the reference distance can be compensated to obtain the compensated data. In the embodiment, an inertial navigation system carried in the aircraft can be used to record the east velocity, the north velocity and the vertical velocity of the aircraft at each pulse transmission.

The mapping module 73 is configured to perform modified Stolt mapping on the compensated data to obtain data subjected to Range Cell Migration Correction (RCMC) and range-azimuth coupling compensation;

specifically, the compensated data is transformed firstly to a 2D frequency domain through azimuth Fourier transform, then modified Stolt mapping is performed on the transformed data in the 2D frequency domain; here, the modification separates RCMC and range-azimuth coupling compensation from azimuth focusing on a basis of the conventional Stolt mapping, and the separation is intended to complete compensation of a space-variant motion error before the azimuth compression. The modified Stolt mapping is expressed as the expression (6), where $f_2$ represents a new range frequency variable, $f_t$ represents a range frequency, $f_\eta$ represents an azimuth frequency and $f_c$ represents a carrier frequency of the radar; after completion of the modified Stolt mapping, the 2D spectrum of the data can be expressed as the expression (7), it can be seen from the expression (7) that the square root term of the phase term is only related to the azimuth frequency rather than to the range frequency; then the data subjected to the RCMC and the range-azimuth coupling compensation can be obtained using the space-variant motion error compensation.

The second compensation module 74 is configured to compensate the data subjected to the RCMC and the range-azimuth coupling compensation with a residual motion error;

specifically, the data subjected to the RCMC and the range-azimuth coupling compensation is transformed to a 2D time domain through 2D inverse Fourier transform; the data has some unknown errors besides the residual motion error at the reference distance, such as the error of the system per se, a non-motion error, and the like; the residual motion error compensates using the space-variant motion compensation to obtain the data subjected to the compensation of the residual motion error; in the embodiment, the space-variant motion compensation can be a Phase Gradient Autofocus (PGA) method.

The azimuth focusing module 75 is configured to perform the azimuth focusing on the data subjected to the compensation of the residual motion error;

after completion of the above steps, the data subjected to the compensation of the residual motion error is transformed to a range Doppler domain, and azimuth compression is performed on the data transformed to the range Doppler domain, where the azimuth range matched filtering function can be represented by the expression (8).

The completion of this step indicates completion of imaging of an NLFM signal.

In practical applications, the pulse compression module 71, the first compensation module 72, the mapping module 73, the second compensation module 74 and the azimuth focusing module 75 can each be implemented by a Central Processing Unit (CPU), a Micro Processing Unit (MPU), a Digital Signal Processor (DSP) or a Field Programmable Gate Array (FPGA) of an SAR device.

What described are merely preferable embodiments of the present disclosure, and are not intended to limit the scope of protection of the present disclosure. All modifications, replacements and improvements made within the spirit and principles of the present disclosure should be included within the scope of protection of the present disclosure.

**Claims**

1. A method for Synthetic Aperture Radar, SAR, imaging based on a Non-Linear Frequency Modulation, NLFM, signal, comprising:

   performing range pulse compression on echo data according to a transmitted NLFM signal to determine data subjected to the range pulse compression (101);
   determining a slant range error, and compensating, according to the slant range error, the data subjected to the range pulse compression for a motion error at a reference distance to obtain compensated data (102);
   performing modified Stolt mapping on the compensated data to obtain data subjected to Range Cell Migration Correction, RCMC, and range-azimuth coupling compensation (103); and
   compensating the data subjected to the RCMC and the range-azimuth coupling compensation for a residual motion error, and performing azimuth focusing on the data subjected to the compensation of the residual motion error (104),
   wherein performing the range pulse compression on the echo data according to the transmitted NLFM signal to determine the data subjected to the range pulse compression (101) comprises:

   demodulating the echo data and performing two dimensional, 2D, Fourier transform on the demodulated echo data to obtain echo data in a range frequency domain;
   filling two ends of the transmitted NLFM signal with zeros so as to reach a length of the echo data, performing Fourier transform on the transmitted NLFM signal subjected to the zero-filling and then conjugating the zero-filled NLFM signal subjected to the Fourier transform to obtain a processed NLFM signal; and
   multiplying the processed NLFM signal by the echo data in the range frequency domain and performing 2D inverse Fourier transform on a product of the multiplication to obtain the data subjected to the range pulse compression,
   wherein performing the modified Stolt mapping on the compensated data to obtain the data subjected to the RCMC and the range-azimuth coupling compensation (103) comprises:
   performing azimuth Fourier transform on the compensated data and performing the modified Stolt mapping on the data subjected to the azimuth Fourier transform to obtain the data subjected to the RCMC and the range-azimuth coupling compensation, wherein the modified Stolt mapping is expressed as

   $$f_2 = \sqrt{\left(f_c + f_t\right)^2 - \frac{c^2 f_\eta^2}{4V_s^2}} - \sqrt{f_c^2 - \frac{c^2 f_\eta^2}{4V_s^2}}$$

   where $f_2$ represents a new range frequency variable, $V_s$ represents a velocity of a radar, c represents a velocity of light, $f_t$ represents a range frequency, $f_\eta$ represents an azimuth frequency and $f_c$ represents a carrier frequency of the radar.

2. The method according to claim 1, wherein determining the slant range error, and compensating, according to the slant range error, the data subjected to the range pulse compression for the motion error at the reference distance to obtain the compensated data (102) comprises:

acquiring a real motion path by fitting according to an east velocity, a north velocity and a vertical velocity, and determining the slant range error between the real motion path and an ideal motion path in a sight-line direction; and

transforming the data subjected to the range pulse compression to a range frequency domain and multiplying the transformed data by a phase corresponding to the slant range error to obtain the compensated data.

3. The method according to claim 1, wherein compensating the data subjected to the RCMC and the range-azimuth coupling compensation for the residual motion error and performing the azimuth focusing on the data subjected to the compensation of the residual motion error (104) comprises:

performing 2D inverse Fourier transform on the data subjected to the RCMC and the range-azimuth coupling compensation, and compensating for the residual motion error using space-variant motion compensation to obtain the data subjected to the compensation of the residual motion error; and

transforming the data subjected to the compensation of the residual motion error to a range Doppler domain and performing azimuth compression on the data transformed to the range Doppler domain.

4. A device for Synthetic Aperture Radar, SAR, imaging based on a Non-Linear Frequency Modulation, NLFM, signal, comprising a pulse compression module (71), a first compensation module (72), a mapping module (73), a second compensation module (74) and an azimuth focusing module (75), wherein

the pulse compression module (71) is configured to perform range pulse compression on echo data according to a transmitted NLFM signal to determine data subjected to the range pulse compression;

the first determination module (72) is configured to determine a slant range error, and compensate, according to the slant range error, the data subjected to the range pulse compression for a motion error at a reference distance to obtain compensated data;

the mapping module (73) is configured to perform modified Stolt mapping on the compensated data to obtain data subjected to Range Cell Migration Correction, RCMC, and range-azimuth coupling compensation;

the second compensation module (74) is configured to compensate the data subjected to the RCMC and the range-azimuth coupling compensation for a residual motion error; and

the azimuth focusing module (75) is configured to perform azimuth focusing on the data subjected to the compensation of the residual motion error,

wherein the pulse compression module (71) is specifically configured to:

demodulate the echo data and perform two dimensional, 2D, Fourier transform on the demodulated echo data to obtain echo data in a range frequency domain;

fill two ends of the transmitted NLFM signal with zeros so as to reach a length of the echo data, perform Fourier transform on the transmitted NLFM signal subjected to the zero-filling and then conjugate the zero-filled NLFM signal subjected to the Fourier transform to obtain a processed NLFM signal; and

multiply the processed NLFM signal by the echo data in the range frequency domain and perform 2D inverse Fourier transform on a product of the multiplication to obtain the data subjected to the range pulse compression, wherein the mapping module (73) is specifically configured to:

perform azimuth Fourier transform on the compensated data and perform the modified Stolt mapping on the data subjected to the azimuth Fourier transform to obtain the data subjected to the RCMC and the range-azimuth coupling compensation, wherein the modified Stolt mapping is expressed as

$$f_2 = \sqrt{(f_c + f_t)^2 - \frac{c^2 f_\eta^2}{4V_s^2}} - \sqrt{f_c^2 - \frac{c^2 f_\eta^2}{4V_s^2}}$$

where $f_2$ represents a new range frequency variable, $V_s$ represents a velocity of a radar, c represents a velocity of light, $f_t$ represents a range frequency, $f_\eta$ represents an azimuth frequency and $f_c$ represents a carrier frequency of the radar.

5. The device according to claim 4, wherein the first compensation module (72) is specifically configured to:

acquire a real motion path by fitting according to an east velocity, a north velocity and a vertical velocity, and determine the slant range error between the real motion path and an ideal motion path in a sight-line direction; and transform the data subjected to the range pulse compression to a range frequency domain and multiply the transformed data by a phase corresponding to the slant range error to obtain the compensated data.

6. The device according to claim 4, wherein:

the second compensation module (74) is specifically configured to perform 2D inverse Fourier transform on the data subjected to the RCMC and the range-azimuth coupling compensation, and compensate for the residual motion error using space-variant motion compensation to obtain the data subjected to the compensation of the residual motion error; and

the azimuth focusing module (75) is specifically configured to transform the data subjected to the compensation of the residual motion error to a range Doppler domain and perform azimuth compression on the data transformed to the range Doppler domain.

## Patentansprüche

1. Verfahren zur SAR-Bildgebung (SAR = Radar mit synthetischer Apertur), basierend auf einem NLFM-Signal (NLFM = nichtlineare Frequenzmodulation), umfassend:

Durchführen einer Entfernungsimpulskompression an Echodaten gemäß einem gesendeten NLFM-Signal, um der Entfernungsimpulskompression unterzogene Daten zu bestimmen, (101);

Bestimmen eines Schrägentfernungsfehlers und Unterziehen, gemäß dem Schrägentfernungsfehler, der der Entfernungsimpulskompression unterzogenen Daten einer Kompensierung eines Bewegungsfehlers in einem Bezugsabstand, um kompensierte Daten zu erlangen, (102);

Durchführen einer modifizierten Stolt-Abbildung an den kompensierten Daten, um einer RCMC (Range Cell Migration Correction (Entfernungszellmigrationskorrektur)) und einer Entfernungsazimutkopplungskompensierung unterzogene Daten zu erlangen, (103); und

Unterziehen der der RCMC und der Entfernungsazimutkopplungskompensierung unterzogenen Daten einer Kompensierung eines Restbewegungsfehlers und Durchführen einer Azimutfokussierung an den der Kompensierung des Restbewegungsfehlers unterzogenen Daten (104),

wobei das Durchführen der Entfernungsimpulskompression an den Echodaten gemäß dem gesendeten NLFM-Signal, um die der Entfernungsimpulskompression unterzogenen Daten zu bestimmen, (101) umfasst:

Demodulieren der Echodaten und Durchführen einer zweidimensionalen Fourier-Transformation (2D-Fourier-Transformation) an den demodulierten Echodaten, um Echodaten in einem Entfernungsfrequenzbereich zu erlangen;

Auffüllen von zwei Enden des gesendeten NLFM-Signals mit Nullen, um eine Länge der Echodaten zu erreichen, Durchführen einer Fourier-Transformation an dem der Nullauffüllung unterzogenen gesendeten NLFM-Signal und anschließendes Konjugieren des mit Nullen aufgefüllten NLFM-Signals, das der Fourier-Transformation unterzogen wurde, um ein verarbeitetes NLFM-Signal zu erlangen; und

Multiplizieren des verarbeiteten NLFM-Signals mit den Echodaten in dem Entfernungsfrequenzbereich und Durchführen einer zweidimensionalen inversen Fourier-Transformation an einem Produkt der Multiplikation, um die der Entfernungsimpulskompression unterzogenen Daten zu erlangen,

wobei das Durchführen der modifizierten Stolt-Abbildung an den kompensierten Daten, um die der RCMC und der Entfernungsazimutkopplungskompensierung unterzogenen Daten zu erlangen, (103) umfasst:

Durchführen einer Azimut-Fourier-Transformation an den kompensierten Daten und Durchführen der modifizierten Stolt-Abbildung an den der Azimut-Fourier-Transformation unterzogenen Daten, um die der RCMC und der Entfernungsazimutkopplungskompensierung unterzogenen Daten zu erlangen, wobei die modifizierte Stolt-Abbildung ausgedrückt wird als

$$f_2 = \sqrt{\left(f_c + f_t\right)^2 - \frac{c^2 f_\eta^2}{4V_s^2}} - \sqrt{f_c^2 - \frac{c^2 f_\eta^2}{4V_s^2}}$$

wo $f_2$ eine neue Entfernungsfrequenzvariable darstellt, $V_s$ eine Geschwindigkeit eines Radars darstellt, c eine Lichtgeschwindigkeit darstellt, $f_t$ eine Entfernungsfrequenz darstellt, $f_n$ eine Azimutfrequenz darstellt

und $f_c$ eine Trägerfrequenz des Radars darstellt.

2.  Verfahren nach Anspruch 1, wobei das Bestimmen des Schrägentfernungsfehlers und das Unterziehen, gemäß dem Schrägentfernungsfehler, der der Entfernungsimpulskompression unterzogenen Daten einer Kompensierung des Bewegungsfehlers in dem Bezugsabstand, um die kompensierten Daten zu erlangen, (102) umfasst:

    Erfassen einer realen Bewegungsbahn durch Anpassung gemäß einer Ostgeschwindigkeit, einer Nordgeschwindigkeit und einer Vertikalgeschwindigkeit und Bestimmen des Schrägentfernungsfehlers zwischen der realen Bewegungsbahn und einer idealen Bewegungsbahn in einer Sichtlinienrichtung; und
    Transformieren der der Entfernungsimpulskompression unterzogenen Daten in einen Entfernungsfrequenzbereich und Multiplizieren der transformierten Daten mit einer Phase entsprechend dem Schrägentfernungsfehler, um die kompensierten Daten zu erlangen.

3.  Verfahren nach Anspruch 1, wobei das Unterziehen der der RCMC und der Entfernungsazimutkopplungskompensierung unterzogenen Daten einer Kompensierung des Restbewegungsfehlers und das Durchführen der Azimutfokussierung an den der Kompensierung des Restbewegungsfehlers unterzogenen Daten (104) umfasst:

    Durchführen einer zweidimensionalen inversen Fourier-Transformation an den der RCMC und der Entfernungsazimutkopplungskompensierung unterzogenen Daten und Kompensieren des Restbewegungsfehlers unter Verwendung einer Kompensierung einer raumveränderlichen Bewegung, um die der Kompensierung des Restbewegungsfehlers unterzogenen Daten zu erlangen; und
    Transformieren der der Kompensierung des Restbewegungsfehlers unterzogenen Daten in einen Entfernungsdopplerbereich und Durchführen einer Azimutkompression an den in den Entfernungsdopplerbereich transformierten Daten.

4.  Vorrichtung zur SAR-Bildgebung (SAR = Radar mit synthetischer Apertur), basierend auf einem NLFM-Signal (NLFM = nichtlineare Frequenzmodulation), umfassend ein Impulskompressionsmodul (71), ein erstes Kompensierungsmodul (72), ein Abbildungsmodul (73), ein zweites Kompensierungsmodul (74) und ein Azimutfokussierungsmodul (75), wobei

    das Impulskompressionsmodul (71) so konfiguriert ist, dass es eine Entfernungsimpulskompression an Echodaten gemäß einem gesendeten NLFM-Signal durchführt, um der Entfernungsimpulskompression unterzogene Daten zu bestimmen;
    das erste Bestimmungsmodul (72) so konfiguriert ist, dass es einen Schrägentfernungsfehler bestimmt und gemäß dem Schrägentfernungsfehler die der Entfernungsimpulskompression unterzogenen Daten einer Kompensierung eines Bewegungsfehlers in einem Bezugsabstand unterzieht, um kompensierte Daten zu erlangen;
    das Abbildungsmodul (73) so konfiguriert ist, dass es eine modifizierte Stolt-Abbildung an den kompensierten Daten durchführt, um einer RCMC (Range Cell Migration Correction (Entfernungszellmigrationskorrektur)) und einer Entfernungsazimutkopplungskompensierung unterzogene Daten zu erlangen;
    das zweite Kompensierungsmodul (74) so konfiguriert ist, dass es die der RCMC und der Entfernungsazimutkopplungskompensierung unterzogenen Daten einer Kompensierung eines Restbewegungsfehlers unterzieht; und
    das Azimutfokussierungsmodul (75) so konfiguriert ist, dass es eine Azimutfokussierung an den der Kompensierung des Restbewegungsfehlers unterzogenen Daten durchführt,
    wobei das Impulskompressionsmodul (71) spezifisch so konfiguriert ist, dass es:

    die Echodaten demoduliert und eine zweidimensionale Fourier-Transformation (2D-Fourier-Transformation) an den demodulierten Echodaten durchführt, um Echodaten in einem Entfernungsfrequenzbereich zu erlangen;
    zwei Enden des gesendeten NLFM-Signals mit Nullen auffüllt, um eine Länge der Echodaten zu erreichen, eine Fourier-Transformation an dem der Nullauffüllung unterzogenen gesendeten NLFM-Signal durchführt und anschließend das mit Nullen aufgefüllte NLFM-Signal, das der Fourier-Transformation unterzogen wurde, konjugiert, um ein verarbeitetes NLFM-Signal zu erlangen; und
    das verarbeitete NLFM-Signal mit den Echodaten in dem Entfernungsfrequenzbereich multipliziert und eine zweidimensionale inverse Fourier-Transformation an einem Produkt der Multiplikation durchführt, um die der Entfernungsimpulskompression unterzogenen Daten zu erlangen,
    wobei das Abbildungsmodul (73) spezifisch so konfiguriert ist, dass es:

    eine Azimut-Fourier-Transformation an den kompensierten Daten durchführt und die modifizierte Stolt-Abbildung an den der Azimut-Fourier-Transformation unterzogenen Daten durchführt, um die der RCMC und der Entfernungsazimutkopplungskompensierung unterzogenen Daten zu erlangen, wobei die modifizierte Stolt-Abbildung ausgedrückt ist als

$$f_2 = \sqrt{(f_c + f_t)^2 - \frac{c^2 f_\eta^2}{4V_s^2}} - \sqrt{f_c^2 - \frac{c^2 f_\eta^2}{4V_s^2}}$$

wo $f_2$ eine neue Entfernungsfrequenzvariable darstellt, $V_s$ eine Geschwindigkeit eines Radars darstellt, c eine Lichtgeschwindigkeit darstellt, $f_t$ eine Entfernungsfrequenz darstellt, $f_n$ eine Azimutfrequenz darstellt und $f_c$ eine Trägerfrequenz des Radars darstellt.

5. Vorrichtung nach Anspruch 4, wobei das erste Kompensierungsmodul (72) spezifisch so konfiguriert ist, dass es:

eine reale Bewegungsbahn durch Anpassung gemäß einer Ostgeschwindigkeit, einer Nordgeschwindigkeit und einer Vertikalgeschwindigkeit erfasst und den Schrägentfernungsfehler zwischen der realen Bewegungsbahn und einer idealen Bewegungsbahn in einer Sichtlinienrichtung bestimmt; und
die der Entfernungsimpulskompression unterzogenen Daten in einen Entfernungsfrequenzbereich transformiert und die transformierten Daten mit einer Phase entsprechend dem Schrägentfernungsfehler multipliziert, um die kompensierten Daten zu erlangen.

6. Vorrichtung nach Anspruch 4, wobei:

das zweite Kompensierungsmodul (74) spezifisch so konfiguriert ist, dass es eine zweidimensionale inverse Fourier-Transformation an den der RCMC und der Entfernungsazimutkopplungskompensierung unterzogenen Daten durchführt und den Restbewegungsfehler unter Verwendung einer Kompensierung einer raumveränderlichen Bewegung kompensiert, um die der Kompensierung des Restbewegungsfehlers unterzogenen Daten zu erlangen; und
das Azimutfokussierungsmodul (75) spezifisch so konfiguriert ist, dass es die der Kompensierung des Restbewegungsfehlers unterzogenen Daten in einen Entfernungsdopplerbereich transformiert und eine Azimutkompression an den in den Entfernungsdopplerbereich transformierten Daten durchführt.

**Revendications**

1. Procédé d'imagerie radar à ouverture synthétique, SAR, basé sur un signal à modulation de fréquence non linéaire, NLFM, comprenant :

l'exécution d'une compression d'impulsion de distance sur des données d'écho en fonction d'un signal NLFM transmis afin de déterminer les données soumises à la compression d'impulsion de distance (101) ;
la détermination d'une erreur de distance-temps, et la compensation, en fonction de ladite erreur de distance-temps, des données soumises à la compression d'impulsion de distance pour une erreur de mouvement à une distance de référence afin d'obtenir des données compensées (102) ;
l'exécution d'une correspondance Stolt modifiée sur les données compensées afin d'obtenir des données soumises à une correction de migration distance des cibles, RCMC, et à une compensation de couplage distance-azimut (103) ; et
la compensation des données soumises à la RCMC et à la compensation de couplage distance-azimut pour une erreur de mouvement résiduelle, et l'exécution d'une mise au point d'azimut sur les données soumises à la compensation de l'erreur de mouvement résiduelle (104),
l'exécution de la compression d'impulsion de distance sur les données d'écho en fonction du signal NLFM transmis pour déterminer les données soumises à la compression d'impulsion de distance (101) comprenant :

la démodulation des données d'écho et l'exécution d'une transformation de Fourier bidimensionnelle, 2D, sur les données d'écho démodulées afin d'obtenir des données d'écho dans un domaine de fréquence de distance ;
l'ajout de zéros à deux extrémités du signal NLFM transmis de manière à atteindre la longueur des données d'écho, l'exécution d'une transformation de Fourier sur le signal NLFM transmis soumis à l'ajout de zéros, puis la conjugaison de signal NLFM à zéros ajoutés soumis à la transformation de Fourier afin d'obtenir un signal NLFM traité ; et
la multiplication du signal NLFM traité par les données d'écho dans le domaine de fréquence de distance et l'exécution d'une transformation de Fourier 2D inverse sur le produit de la multiplication afin d'obtenir les données soumises à la compression d'impulsion de distance,
l'exécution de la correspondance Stolt modifiée sur les données compensées afin d'obtenir les données soumises à la RCMC et à la compensation de couplage distance-azimut (103) comprenant :

l'exécution d'une transformation de Fourier azimutale sur les données compensées et l'exécution de la correspondance Stolt modifiée sur les données soumises à la transformation de Fourier azimutale afin d'obtenir les données soumises à la RCMC et à la compensation de couplage distance-azimut, la correspondance Stolt modifiée étant exprimée comme suit :

$$f_2 = \sqrt{\left(f_c + f_t\right)^2 - \frac{c^2 f_\eta^2}{4V_s^2}} - \sqrt{f_c^2 - \frac{c^2 f_\eta^2}{4V_s^2}}$$

$f_2$ représentant la nouvelle variable de fréquence de distance, $V_s$ représentant la vitesse de radar, $C$ représentant la vitesse de la lumière, $f_t$ représentant la fréquence de distance, $f_n$ représentant la fréquence d'azimut et $f_c$ représentant la fréquence porteuse du radar.

2. Procédé selon la revendication 1, où la détermination de l'erreur de distance-temps, et la compensation, en fonction de l'erreur de distance-temps, des données soumises à la compression d'impulsion de distance pour l'erreur de mouvement à la distance de référence afin d'obtenir les données compensées (102) comprennent :

l'acquisition d'un trajet de déplacement réel par ajustement en fonction d'une vitesse vers l'est, d'une vitesse vers le nord et d'une vitesse verticale, et la détermination de l'erreur de distance-temps entre le trajet de déplacement réel et un trajet de déplacement idéal dans une direction de visée ; et
la transformation des données soumises à la compression d'impulsion de distance en un domaine de fréquence de distance, et la multiplication des données transformées par une phase correspondant à l'erreur de distance-temps afin d'obtenir les données compensées.

3. Procédé selon la revendication 1, où la compensation des données soumises à la RCMC et la compensation de couplage distance-azimut pour l'erreur de mouvement résiduelle et l'exécution de la mise au point d'azimut sur les données soumises à la compensation de l'erreur de mouvement résiduelle (104) comprennent :

l'exécution d'une transformation de Fourier 2D inverse sur les données soumises à la RCMC et à la compensation de couplage distance-azimut, et la compensation pour l'erreur de mouvement résiduelle au moyen d'une compensation de mouvement à variation spatiale afin d'obtenir les données soumises à la compensation de l'erreur de mouvement résiduelle ; et
la transformation des données soumises à la compensation de l'erreur de mouvement résiduelle en un domaine de distance Doppler et l'exécution d'une compression d'azimut sur les données transformées en domaine de distance Doppler.

4. Dispositif pour imagerie radar à ouverture synthétique, SAR, basé sur un signal de modulation de fréquence non linéaire, NLFM, comprenant un module de compression d'impulsion (71), un premier module de compensation (72), un module de correspondance (73), un deuxième module de compensation (74) et un module de mise au point d'azimut (75), où
le module de compression d'impulsion (71) est prévu pour exécuter une compression d'impulsion de distance sur des données d'écho en fonction d'un signal NLFM transmis pour déterminer les données soumises à la compression d'impulsion de distance ;
le premier module de détermination (72) est prévu pour déterminer une erreur de distance-temps, et compenser, en fonction de l'erreur de distance-temps, les données soumises à la compression d'impulsion de distance pour une erreur de mouvement à une distance de référence afin d'obtenir des données compensées ;
le module de correspondance (73) est prévu pour exécuter une correspondance Stolt modifiée sur les données compensées afin d'obtenir des données soumises à une correction de migration de cellule de gamme, RCMC, et à une compensation de couplage distance-azimut ;
le deuxième module de compensation (74) est prévu pour compenser les données soumises à la RCMC et à la compensation de couplage distance-azimut pour une erreur de mouvement résiduelle ; et
le module de mise au point d'azimut (75) est prévu pour exécuter une mise au point d'azimut sur les données soumises à la compensation de l'erreur de mouvement résiduelle,

le module de compression d'impulsion (71) étant spécifiquement prévu pour :

démoduler les données d'écho et exécuter une transformation de Fourier bidimensionnelle, 2D, sur les données d'écho démodulées afin d'obtenir des données d'écho dans un domaine de fréquence de distance ;

ajouter des zéros à deux extrémités du signal NLFM transmis de manière à atteindre la longueur des données d'écho, exécuter une transformation de Fourier sur le signal NLFM transmis soumis à l'ajout de zéros, puis conjuguer le signal NLFM à zéros ajoutés soumis à la transformation de Fourier afin d'obtenir un signal NLFM traité ; et

multiplier le signal NLFM traité par les données d'écho dans le domaine de fréquence de distance et exécuter une transformation de Fourier 2D inverse sur le produit de la multiplication afin d'obtenir les données soumises à la compression d'impulsion de distance,

le module de correspondance (73) étant spécifiquement prévu pour :

exécuter une transformation de Fourier azimutale sur les données compensées et exécuter la correspondance Stolt modifiée sur les données soumises à la transformation de Fourier azimutale afin d'obtenir les données soumises à la RCMC et à la compensation de couplage distance-azimut, la correspondance Stolt modifiée étant exprimée comme suit :

$$f_2 = \sqrt{\left(f_c + f_t\right)^2 - \frac{c^2 f_\eta^2}{4V_s^2}} - \sqrt{f_c^2 - \frac{c^2 f_\eta^2}{4V_s^2}}$$

$f_2$ représentant la nouvelle variable de fréquence de distance, $V_s$ représentant la vitesse de radar, c représentant la vitesse de la lumière, $f_t$ représentant la fréquence de distance, $f_n$ représentant la fréquence d'azimut et $f_c$ représentant la fréquence porteuse du radar.

5. Dispositif selon la revendication 4, où le premier module de compensation (72) est spécifiquement prévu pour :

acquérir un trajet de déplacement réel par ajustement en fonction d'une vitesse vers l'est, d'une vitesse vers le nord et d'une vitesse verticale, et déterminer l'erreur de distance-temps entre le trajet de déplacement réel et un trajet de déplacement idéal dans une direction de visée ; et

transformer les données soumises à la compression d'impulsion de distance en un domaine de fréquence de distance et multiplier les données transformées par une phase correspondant à l'erreur de distance-temps afin d'obtenir les données compensées.

6. Dispositif selon la revendication 4, où :

le deuxième module de compensation (74) est spécifiquement prévu pour exécuter une transformation de Fourier 2D inverse sur les données soumises à la RCMC et à la compensation de couplage distance-azimut, et compenser pour l'erreur de mouvement résiduelle au moyen d'une compensation de mouvement à variation spatiale afin d'obtenir les données soumises à la compensation de l'erreur de mouvement résiduelle ; et

le module de mise au point d'azimut (75) est spécifiquement prévu pour transformer les données soumises à la compensation de l'erreur de mouvement résiduelle en un domaine de distance Doppler et exécuter une compression d'azimut sur les données transformées en domaine de distance Doppler.

Fig.1

Range pulse compression is performed on echo data according to a transmitted NLFM signal to determine data subjected to the range pulse compression — 101

A slant range error is determined, and the data subjected to the range pulse compression is compensated for a motion error at a reference distance according to the slant range error to obtain compensated data — 102

Modified Stolt mapping is performed on the compensated data to obtain data subjected to RCMC and range-azimuth coupling compensation — 103

The data subjected to the RCMC and the range-azimuth coupling compensation is compensated for a residual motion error and azimuth focusing is performed on the data subjected to the compensation of the residual motion error — 104

Fig. 2

Fig. 3

Fig. 4

Fig. 5

Fig. 6

(a)

(b)

(c)

Fig. 7

```
┌─────────────────────────────────────┐
│     Pulse compression module 71      │
└─────────────────────────────────────┘
                   │
┌─────────────────────────────────────┐
│    First compensation module 72      │
└─────────────────────────────────────┘
                   │
┌─────────────────────────────────────┐
│         Mapping module 73            │
└─────────────────────────────────────┘
                   │
┌─────────────────────────────────────┐
│   Second compensation module 74      │
└─────────────────────────────────────┘
                   │
┌─────────────────────────────────────┐
│     Azimuth focusing module 75       │
└─────────────────────────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CIHAN BAYINDIR.** ENHANCEMENTS TO SYNTHETIC APERTURE RADAR CHIRP WAVEFORMS AND NON-COHERENT SAR CHANGE DETECTION FOLLOWING LARGE SCALE DISASTERS. Georgia Institute of Technology, 01 May 2013, 1-206
- **JAMAL SAEEDI.** Synthetic aperture radar signal processing using nonlinear frequency modulation and phase error compensation. Amirkabir University of Technology, 01 September 2015, 1-139
- **ARMIN W DOERRY.** SAR Processing with Non-Linear FM Chirp Waveforms. *SANDIA Report SAND2006-7729,* 01 December 2006, 1-66
- **JAMAL SAEEDI et al.** Non-linear frequency modulation using piecewise linear functions for synthetic aperture radar imaging. *10th European Conference on Synthetic Aperture Radar,* 05 June 2014, 1-4
- **CIHAN BAYINDIR.** A NOVEL NONLINEAR FREQUENCY MODULATED CHIRP SIGNALFOR SYNTHETIC APERTURE RADAR AND SONAR IMAGING. *Journal of Naval Science and Engineering,* 12 September 2015, 68-81